# EUROPEAN PATENT APPLICATION

(11) **EP 1 471 298 A1**
(43) Date of publication of application: **27.10.2004**
(21) Application number: 04076281.7
(22) Date of filing: 26.04.2004
(51) Int. Cl.: F16L 37/14

(54) **Assembly of at least a first and a second pipe and/or fitting, and method for manufacturing a pipe and/or fitting**

(30) Priority: 25.04.2003 NL 1023263
(71) Applicant: S.R. Vasse Beheer B.V., 7772 AM Hardenberg (NL); Colijn, Albert, 9203 KW Drachten (NL)
(72) Inventor: Vasse, Simon Roelof, 7772 AM Hardenberg (NL); Colijn, Albert, 9203 KW Drachten (NL)
(74) Representative: Winckels, Johannes Hubertus F.

(57) **Abstract**

An assembly of at least a first and a second pipe and/or fitting (1, 2), wherein an integrally thermoformed coupling part (3) of the first pipe and/or fitting (1) is slidable over a coupling part (4) of the second pipe and/or fitting (2) to bring the pipes and/or fittings (1, 2) in a connecting position, wherein the assembly is provided with a blocking element (7) which can be brought between said coupling parts (3, 4), which is arranged to cooperate with blocking recesses (5, 6) of said coupling parts (3, 4) for blocking the first and second pipe and/or fitting (1, 2) in the connecting position. Preferably, at least one of said coupling parts (3, 4) is provided with a strengthening part (11; 120; 220; 320), in particular a ring, collar and/or wall thickening, for strengthening the coupling part (3, 4). The invention further provides a method for manufacturing a pipe and/or fitting.

## Description

The invention relates to an assembly of at least a first and a second pipe and/or fitting.

Such an assembly is known from practice. For the sake of convenience, in the following, only pipes are referred to. However, the term 'pipe' can then also be understood to mean the term 'pipe and/or fitting'. In a first assembly known from practice, the first pipe is provided with a sleeve which, in a connecting position, has been slid over an end of the second pipe. The pipes are maintained in the connecting position by a sealing ring provided between the coupling parts. An advantage of such a coupling is that the pipes are simply and rapidly couplable to each other by it. In addition, the coupling takes up relatively little space. A disadvantage of this known assembly is that the coupling between the pipes is insufficiently pull-out resistant. As a result, the pipes can easily become detached from each other after installation, for instance as a result of unanticipated mechanical influences, in particular a subsidence of a soil in which the assembly extends after installation. Such detachment of the pipes may have various undesired consequences, for instance the escape of substances transported through the pipes.

A further assembly known from practice comprises a pipe system of plastic pipes, where pull-out resistance is ensured by locking the pipes to each other. For this purpose, the coupling fittings are first glued or welded on the ends of the pipes. Then, the two coupling fittings of each pair of opposite pipe ends are slid into a locking fitting to a connecting position. The coupling fittings and locking fittings are then locked to each other in the connecting position by providing locking elements between them in respective grooves. The coupling and locking fittings of this known system serve to provide sufficient force transmission between the pipes without affecting the integrity of the plastic walls of the pipes. Due to the required force transmission, the coupling and locking fittings need to extend over considerable distances along the respective pipe walls. A disadvantage of this known system is that the coupling fittings are relatively large and thus contain much material. In addition, for these fittings, relatively much installation space is required. In addition, the installation of this system is relatively time-consuming.

The present invention contemplates an assembly which is relatively easy to assemble, while the pipes and/or fittings are substantially pull-out resistantly connected to each other after installation.

For this purpose, the assembly according to the invention is characterized by the measures of claim 1.

The invention is based on the insight that at least one of the pipe coupling parts can easily be provided integrally in the respective pipe by thermoforming, while this pipe coupling part is, in addition, provided with at least one blocking recess to lock the respective pipe to another pipe by means of the blocking element. In this manner, use of separate coupling and locking fittings is avoided, so that the installation of the assembly can be carried out relatively rapidly and easily. Further, in this manner, the assembly can be manufactured from relatively little material, without the need of gluing, and relatively inexpensively. In addition, after installation, the assembly takes up little installation space.

For the purpose of installation, the pipes are simply slid onto each other with the respective coupling parts. The blocking element, for instance a key, is then provided between the coupling parts of the pipes, such that the blocking element cooperates with the recesses of the coupling parts for the purpose of blocking the pipes in the connecting position. The thus formed pipe connection is relatively strong so that an undesired uncoupling of the pipes brought about by pulling force is adequately prevented.

With the assembly provided by the invention, a pipe system can easily and rapidly be laid, which offers the advantages mentioned. In addition, at least one pipe of the assembly can easily be coupled to a device, for instance a pump, tank and/or pressure vessel, when this device is provided with at least one coupling part with a recess to couple the coupling part of a pipe according to least claim 12 thereto by means of a blocking element. This coupling part of the device may comprise, for this purpose, for instance, an integrally thermoformed part of the device.

The invention further provides a method characterized by the measures of claim 16.

Because the pipe coupling part is integrally thermoformed in the pipe, the integrity of the pipe can be ensured during the manufacture of the coupling, which is favorable to the pull-out resistance of the pipe. Because the pipe coupling part is provided with at least one blocking recess, the pipe can easily be attached to a coupling part of another pipe in above-described manner, by means of a coupling element.

Preferably, the integral coupling part is flared onto a strengthening element, in particular during and/or for the purpose of thermoforming this coupling part. In this manner, the strengthening element can simply be encapsulated in the respective coupling part during the thermoforming. In this manner, further, a relatively smooth transition between the strengthening part and the respective pipe can be obtained, which results in a relatively pull-out resistant connection. For a good force transmission and a durable pipe coupling, it is, in addition, advantageous when the strengthening element is and/or has been provided with at least one blocking recess by means of which the pipe is couplable to another pipe. The diameter of this pipe coupling part is preferably enlarged relative to another part of the respective pipe during thermoforming so that an end of another pipe is easily placeable therein.

Further elaborations of the invention are described in the subclaims. The invention will now be explained on the basis of a number of exemplary embodiments and with reference to the drawing, in which:
Fig. 1 shows a side elevational view of a first exemplary embodiment of the invention;
Fig. 2 shows a longitudinal cross section of a part of the side elevational view shown in Fig. 1;
Fig. 3 shows a similar longitudinal cross section to Fig. 2 of a second exemplary embodiment;
Fig. 4 shows a similar longitudinal cross section to Fig. 2 of a third exemplary embodiment; and
Fig. 5 shows a similar longitudinal cross section to Fig. 2 of a fourth exemplary embodiment.

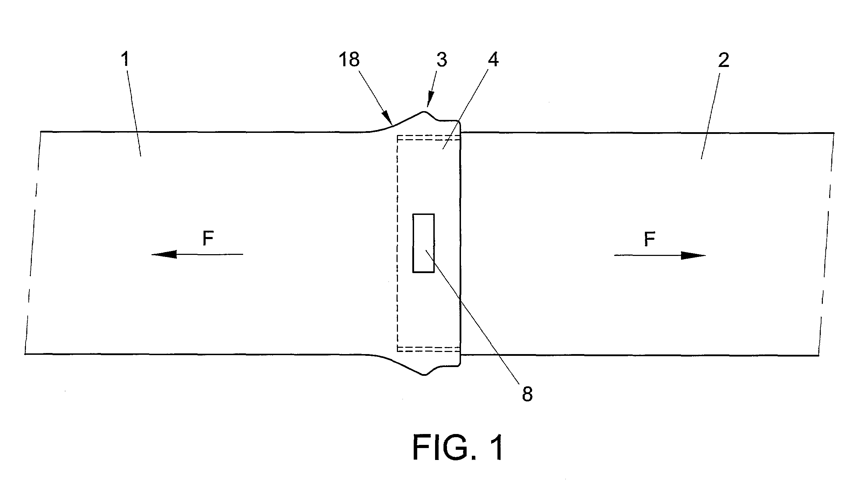

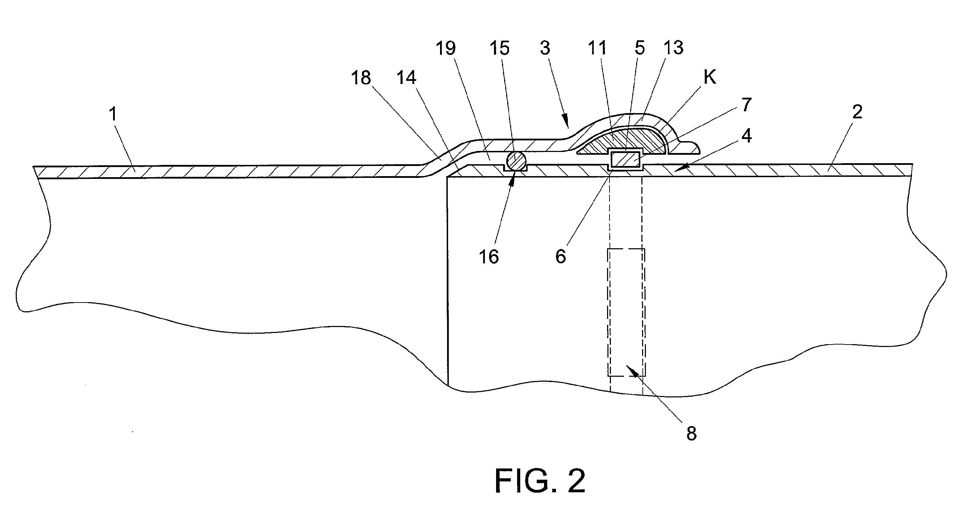

Figs. 1 and 2 show a first exemplary embodiment of the invention, comprising a first pipe 1 and a second pipe 2 of the same diameter. Figs. 1 and 2 show a connecting position of the pipes 1, 2, in which the two pipes 1, 2 overlap each other by respective integral coupling parts 3, 4. The pipe assembly 1, 2 is provided with a blocking element 7 which, at least after installation, extends in annular blocking grooves 5, 6 of the coupling parts 3, 4 of the two pipes 1, 2 to fixedly connect the pipes 1, 2 to each other. The blocking element 7 prevents the pipes 1, 2 from being able to be pulled apart under the influence of the pulling force F. The blocking element 7 has been formed to substantially completely fill the cavity formed by the blocking grooves 5, 6, which results in a very strong pipe connection. Because the pipes 1, 2 are provided with the integral coupling parts 3, 4, the laborious, time-consuming use of separate pipe coupling elements is avoided.

As Figs. 1 and 2 show, the coupling part of the first pipe 1 comprises a relatively short, integrally thermoformed sleeve 3 which has an expanded diameter relative to another part of the first pipe 1. A part 13 of this pipe sleeve 3 has been further expanded outwards in transverse direction to provide a slot on an inside in which a strengthening ring 11 has been received. The blocking groove 5 of the first pipe is provided, on the inside, with this strengthening ring 11. This strengthening ring 11 can easily have been provided in the first pipe 1 during the thermoforming of the pipe sleeve 3, for instance by flaring the pipe onto this ring 11. The extension of the pipe caused hereby has a favorable effect on the mechanical properties of the sleeve 3. In addition, the first pipe 1 comprises an insert passage 8 extending through the wall of the pipe sleeve 3 and through the strengthening ring 11 for providing the blocking element 7 between the first and second pipe 1, 2 during installation of the assembly.

The expanded sleeve 13 and the strengthening ring 11 run - as shown in the cross section of Fig. 2 - with sides facing each other along a curve K. In this manner, during use, a smooth force distribution between the sleeve 3 and the strengthening ring 11 is obtained when a pulling force is exerted on the pipes 1, 2. This pulling force is indicated in Fig. 1 by arrows F. This smooth force distribution increases the durability and pull-out resistance of the assembly.

Fig. 2 shows that the integral coupling part 4 of the second pipe 2 comprises a free end of this pipe 2. The respective annular blocking groove 6 of the second pipe 2 has been provided in the outside of this coupling part 4 of the second pipe 2. Between this blocking groove 6 and the edge 14 of the pipe end of the second pipe 2, a sealing slot 16 provided with one flexible O-ring 15 has been provided in the outside of the second pipe 2. The one O-ring 15 provides a substantially fluid-tight sealing of a longitudinal gap 19 extending between the pipe coupling parts 3, 4 of the pipes 1, 2. The pipe edge 14 is beveled to connect relatively narrowly to a neck 18 of the pipe sleeve of the first pipe.

As Fig. 1 shows, each blocking recess 5, 6 comprises a perpendicular groove which - viewed in pipe longitudinal direction - is bounded by groove sides extending substantially in transverse direction. In addition, the blocking element 7 has a substantially rectangular cross section. As a result, engaging surfaces between the blocking element 7 and the pipes 1,2 are substantially perpendicular to the longitudinal direction of the pipes 1, 2, so that undesired shearing of the pipes 1, 2 along blocking element 7 under the influence of pulling force F is avoided. In this manner, a very high pull-out resistance of the coupling between the pipes 1, 2 is obtained.

The blocking element 7 is preferably detachably received in the recesses 5, 6, such that the blocking element 7 can be removed via the insert opening 8 to simply break the connection between the pipes 1, 2. However, a fixed connection, for instance by using an adhesive, is also possible.

It is advantageous when each of the pipes 1, 2 is also provided, at an opposite end (not shown), with a coupling part 3, 4 to connect another pipe and/or fitting - with a respective coupling part 4, 3 - thereto. Thus, the first pipe 1 may, for instance, be provided with a second coupling part, at a distance from the pipe sleeve 3 shown, in particular to an opposite pipe end. This second coupling part may, for instance, also comprise a pipe sleeve 3 with an inner groove 5 to slide an end of another pipe provided with an outer groove 6 into it.

On the other hand, such a second coupling part of the first pipe 1 may, for instance, substantially be formed as the coupling part 4 shown of the second pipe 2, with a blocking slot 6 on the outside of the pipe, so that, over this, an integral pipe sleeve of a third pipe (not shown) can simply be coupled. From a number of such pipes, which are provided with a blocking slot on an inside near one end and on an outside near the other end, a relatively long assembled pipe can simply be formed, which can be subjected to relatively high pulling forces.

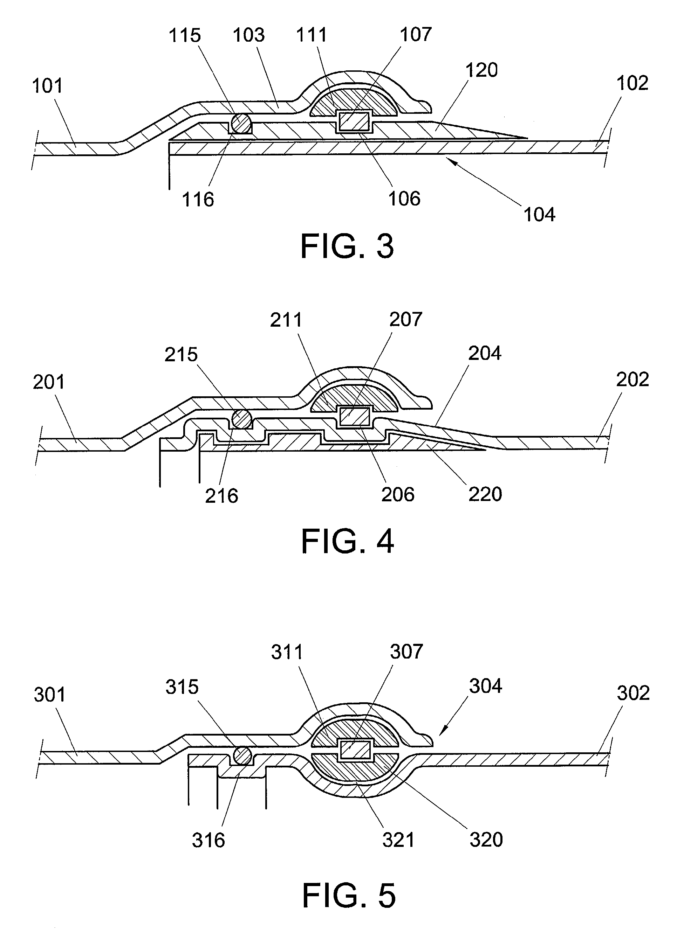

Fig. 3 shows a second exemplary embodiment, which differs from the first exemplary embodiment in that the second pipe 102 is provided, on an outside, with a collar 120 comprising the blocking recess 106. The pipe sleeve 103 of the first pipe 101 has such a wide design that the second pipe 102 is slidable into this pipe sleeve 103 by its collar 120. The collar 120 is provided, on the outside, with a ring slot 116 in which a sealing O-ring 115 has been received. By using the integral collar 120, a very durable, pull-out resistant connection can be achieved. The collar 120 may, for instance, be used when the wall of the second pipe 102 is relatively thin and is thus little suitable to be directly provided with a blocking recess.

Fig. 4 shows a third exemplary embodiment, in which the coupling part 204 of the second pipe 202 has a widened design and is provided, on an inside, with a strengthening bush 220. The second pipe 202 has preferably been flared onto this bush 220. The inside of the strengthening bush 220 extends in line with the inside of the other part of the second pipe 202 in order to avoid an abrupt transition of the pipe inner space. The coupling part 204 of the second pipe 202 is provided with a first reduction 216 around which a sealing ring 215 has been provided. Further, this coupling part 204 comprises a second reduction to provide the blocking slot 206 for the blocking element 207. The strengthening bush 220 extends along the two reductions to strengthening the second pipe 2 there.

Fig. 5 shows a fourth exemplary embodiment, in which the coupling part 304 of the second pipe 302 is provided with a reduction 321 in which a strengthening ring 320 has been provided. The outer circumference of this strengthening ring 320 is provided with a blocking recess 306 to retain a part of the blocking element 307. The reduction 321 for the strengthening ring 320 forms a gradual constriction of the second pipe 302 to hinder flow of the pipe as little as possible. A second pipe reduction 316 shown of the coupling part 304 of the second pipe 302, on which a sealing O-ring 315 has been provided, preferably also forms such a gradual pipe constriction.

It is evident to a skilled person that the invention is not limited to the exemplary embodiments described. Various modifications are possible within the scope of the invention as set forth in the following claims.

For instance, the blocking element 7 is preferably relatively form-retaining in a transverse direction of this element 7 to provide a good locking of the pipe coupling. The blocking element 7 may, for instance, comprise a bendable and/or flexible beam or strip which is manufactured from a non-compressible or poorly compressible material. The blocking element may be formed in various manners, for instance by a casting process, thermal process and/or other formation process.

In addition, the pipe 1, 2 may comprise various dimensions and cross-sections, for instance a round, angular and/or differently shaped cross-section. The pipe 1, 2 may, for instance, comprise a wholly or partly straight, bent and/or differently shaped pipe. The pipe may comprise various materials, for instance extruded plastic, biaxially extended plastic, a thermoplastic, polyvinylchloride, polyethene, polypropylene and/or another thermoplastic, a metal and/or alloy and a combination of these or other materials. The pipes and/or fittings may have the same and/or different diameters.

The fitting may for instance comprise a pipe branch, for instance a T-piece, a Y-piece or the like.

Further, for instance, per pipe coupling part, one or more blocking recesses may be provided. Also, one or more blocking elements 7 may be used to bring about a pipe connection.

Further, the thermoformed coupling part 3 of the first pipe and/or fitting 1 is preferably provided, on the inside, with a strengthening part 11; 111; 211; 311, in particular a ring, collar and/or wall thickening, for strengthening the coupling part 3. An advantage is that the assembly is thus relatively compact while preserving a desired durability. In addition, the assembly can relatively simply be manufactured by means of flaring. Preferably, the respective blocking recess 5 has then simply been provided in the strengthening part 11.

## Claims

1. An assembly of at least a first and a second pipe and/or fitting (1, 2), wherein an integrally thermoformed coupling part (3) of the first pipe and/or fitting (1) is slidable over a coupling part (4) of the second pipe and/or fitting (2) to bring the pipes and/or fittings (1, 2) in a connecting position, wherein the assembly is provided with a blocking element (7) which can be brought between said coupling parts (3, 4), which is arranged to cooperate with blocking recesses (5, 6) of said coupling parts (3, 4) for blocking the first and second pipe and/or fitting (1, 2) in the connecting position.

2. An assembly according to claim 1, wherein at least one of said coupling parts (3, 4) is provided with a strengthening part (11; 120; 220; 320), in particular a ring, collar and/or wall thickening, for strengthening the coupling part (3, 4).

3. An assembly according to claim 2, wherein the respective blocking recess (5, 6) has been provided in said strengthening part (11; 120; 320).

4. An assembly according to claim 2 or 3, wherein said strengthening part (11; 220) extends at least along a wall part of the respective pipe coupling part (3, 4), in which wall part the respective blocking recess (5, 6) has been provided.

5. An assembly according to any one of the preceding claims, wherein said blocking recess (5, 6) is provided with at least one side extending substantially in a transverse direction of the respective coupling part (3, 4), wherein said blocking recess particularly comprises a perpendicular groove.

6. An assembly according to any one of the preceding claims, wherein the coupling part (3) of said first pipe and/or fitting (1) is provided with at least one opening (8) to bring the blocking element (7) from an environment between said coupling parts (3, 4).

7. An assembly according to any one of the preceding claims, wherein at least one of said coupling parts (3, 4) is provided with a sealing section (15) to connect said pipes and/or fittings (1, 2) substantially fluid-tightly to each other, in the connecting position.

8. An assembly according to any one of the preceding claims, wherein said pipe and/or fitting (1, 2) is provided, at opposite ends, with said coupling parts (3, 4).

9. An assembly according to any one of the preceding claims, wherein said first pipe and/or fitting (1) is provided, at a distance from the said coupling part (3) slidable over the second pipe and/or fitting (2), with a second coupling part, which second coupling part substantially has the shape of the coupling part (4) of said second pipe and/or fitting (2).

10. An assembly according to any one of the preceding claims, wherein said pipe and/or fitting comprises a thermoplastic, for instance polyvinylchloride, polyethene, and/or polypropylene.

11. An assembly according to any one of the preceding claims, wherein the thermoformed coupling part (3) of the first pipe (1) has an enlarged diameter relative to another part of the first pipe (1).

12. A pipe and/or fitting of an assembly according to any one of claims 1-11.

13. A pipe system, provided with at least one assembly according to any one of claims 1-11.

14. A device, for instance a pump, tank and/or pressure vessel, provided with at least one coupling part with a recess to couple the coupling part of a pipe and/or fitting (1, 2) according to claim 12 thereto by means of a blocking element (7).

15. A device according to claim 14, wherein said coupling part comprises an integrally thermoformed part of the device.

16. A method for manufacturing a pipe and/or fitting, wherein a pipe coupling part (3, 4) is thermoformed integrally in the pipe (1, 2), wherein the pipe coupling part (3, 4) is provided with at least one blocking recess (5, 6).

17. A method according to claim 16, wherein said integral coupling part (3, 4) is flared onto a strengthening element (11; 220), in particular during and/or for the purpose of the thermoforming of this coupling part (3, 4).

18. A method according to claim 17, wherein the strengthening element (11; 220) is and/or has been provided with at least one blocking recess (5; 206) by means of which the pipe (1, 2) is couplable to another pipe.

19. A method according to any one of claims 16-18, wherein, during thermoforming, the diameter of said pipe coupling part (3, 4) is enlarged relative to another part of the respective pipe (1, 2).
